# FASCICULE DE BREVET EUROPEEN

(11) **EP 3 201 480 B1**
(45) Date de publication et mention de la délivrance du brevet: **19.06.2019**
(21) Numéro de dépôt: 15771205.0
(22) Date de dépôt: 11.09.2015
(51) Int. Cl.: F16B 5/06, B60H 1/00

(54) **ENSEMBLE COMPRENANT D'UNE PART UN SYSTEME DE SOLIDARISATION ENTRE UN ORGANE EQUIPANT UN VEHICULE AUTOMOBILE ET UN CHASSIS DU VEHICULE AUTOMOBILE ET D'AUTRE PART LEDIT ORGANE**
ANORDNUNG MIT EINEM BEFESTIGUNGSSYSTEM ZWISCHEN EINEM BAUTEIL AUF EINEM KRAFTFAHRZEUG UND FAHRWERK EINES KRAFTFAHRZEUGS UND DEM BAUTEIL
ASSEMBLY WITH A SECURING SYSTEM BETWEEN A MEMBER PROVIDED ON A MOTOR VEHICLE AND A MOTOR VEHICLE CHASSIS AND THE MEMBER

(30) Priorité: 02.10.2014 FR 1459410
(43) Date de publication de la demande: 09.08.2017
(73) Titulaire: PSA Automobiles SA, 78300 Poissy (FR)
(72) Inventeur: BELLUZ, Michael, F-91190 Gif Sur Yvette (FR)
(74) Mandataire: Bourguignon, Eric Pascal Jean
(86) Numéro de dépôt international: PCT/FR2015/052429
(87) Numéro de publication internationale: WO 2016/051039

(56) Documents cités:
- DE-C1- 4 343 680
- US-A- 4 174 850
- US-A1- 2003 230 397
- US-A1- 2006 054 306

## Description

L'invention porte sur un ensemble comprenant d'une part un système de solidarisation entre un organe équipant un véhicule automobile et un châssis du véhicule automobile et d'autre part ledit organe, le système de solidarisation comprenant une patte de liaison comportant une première plaque pour assurer une liaison mécanique avec le châssis et une deuxième plaque pour assurer une liaison mécanique avec l'organe, la patte de liaison comprenant une plaque intermédiaire interposée entre la première plaque et la deuxième plaque.

Le document FR 2,909,140 décrit un système de solidarisation d'un organe équipant un véhicule automobile à une partie fixe du véhicule automobile, qui est destiné à se désolidariser en cas d'application à l'organe d'un effort ayant une intensité supérieure à une intensité-seuil. Le système de solidarisation comprend une liaison par encliquetage dimensionnée pour se désolidariser totalement ou partiellement sur application d'un effort ayant une intensité supérieure à l'intensité-seuil. La liaison comprend une partie mâle et une partie femelle, la partie mâle est apte à coulisser dans la partie femelle. L'une des parties comporte une butée située en vis-à-vis d'une extrémité de l'autre partie. L'extrémité de l'autre partie et/ou la butée est pourvue d'une face oblique par rapport à la direction de coulissement, et dans lequel l'extrémité de la partie mâle est prévue flexible pour échapper à la butée en glissant sur la face oblique en cas d'application d'un effort ayant une intensité supérieure à l'intensité-seuil. La partie femelle comprend une surface de coulissement sur laquelle vient en appui la partie mâle, et deux guides situés de part et d'autre de cette surface pour guider les déplacements de la partie mâle sur la surface. Au moins un guide comprend une tête rabattue en vis-à-vis de la surface de coulissement, pour maintenir la partie mâle en appui sur la surface de coulissement.

US 2006/0054306 A1 décrit un autre système de solidarisation d'un organe équipant un véhicule automobile à une partie fixe du véhicule automobile.

Un tel système de solidarisation mérite d'être amélioré pour faciliter un montage et/ou un démontage de l'organe sur la partie fixe, et pour empêcher un risque d'égarement de la liaison lors d'une opération de démontage, tout en optimisant une résistance mécanique de la liaison, en évitant une usure de la liaison au fur et à mesure d'opérations de montage et démontage de cette dernière, en minimisant l'impact de vibrations, la liaison étant néanmoins souhaité simple, légère et facile à réaliser.

Un but est de proposer un système de solidarisation entre un organe équipant un véhicule automobile, tel qu'un filtre à air, une conduite d'alimentation en air, un réservoir ou un autre organe analogue et un châssis du véhicule automobile, tel que la caisse de ce dernier ou analogue, le système de solidarisation étant robuste, résistant aux vibrations pour maintenir de manière certaine l'organe sur le châssis y compris lorsque ce dernier est soumis à de fortes vibrations, le système de solidarisation étant apte à éviter une usure de cet dernier au fur et à mesure d'opérations de montage et démontage du système de solidarisation, ainsi qu'à empêcher un risque d'égarement d'une patte de liaison constitutive du système de solidarisation lors d'une opération de démontage de l'organe sur le châssis, le système de solidarisation étant simple, léger et facile à réaliser.

L'invention est déterminée par les revendications jointes. Un système de solidarisation d'un ensemble de la présente invention est un système de solidarisation entre un organe équipant un véhicule automobile et un châssis du véhicule automobile. Le système de solidarisation comprend une patte de liaison comportant une première plaque pour assurer une liaison mécanique avec le châssis et une deuxième plaque pour assurer une liaison mécanique avec l'organe. La patte de liaison comprend une plaque intermédiaire interposée entre la première plaque et la deuxième plaque.

Selon la présente invention, la deuxième plaque est équipée d'une languette comprenant une bordure distale qui, en position de stockage de la patte de liaison, est en contact contre une butée de blocage ménagée en bordure d'une première encoche que comporte une surface supérieure de l'organe, de telle sorte qu'en position de stockage, la patte de liaison est maintenue fixe sur l'organe. Ladite patte de liaison est conformée en un S, la première plaque et la deuxième plaque formant les branches du S reliées par la plaque intermédiaire.

De préférence, la première encoche est ménagée entre deux glissières entre lesquelles la deuxième plaque coulisse entre ladite position de stockage et une position d'utilisation de la patte de liaison dans laquelle un premier orifice ménagé à travers la première plaque est emboîté sur un pion que comprend le châssis.

La surface supérieure de l'organe comporte avantageusement une deuxième encoche à l'intérieur duquel le doigt est engagé en position d'utilisation de la patte de liaison.

La languette est avantageusement ménagée selon un plan de languette qui forme un deuxième angle aigu avec un plan de deuxième plaque selon lequel la deuxième plaque est ménagée.

La patte de liaison est avantageusement équipée d'un organe de préhension pour la manoeuvre de la languette entre la position d'utilisation et la position de stockage.

L'organe de préhension comprend avantageusement deux platines parallèles dont une première platine solidaire de la deuxième plaque et une deuxième platine solidaire de la languette.

La platine de liaison comprend préférentiellement des contreforts qui sont interposés d'une part entre la première platine et la plaque intermédiaire, et d'autre part entre la deuxième platine et la languette.

L'organe est indifféremment l'un quelconque d'un filtre à air, une conduite d'alimentation en air et un réservoir tandis que le châssis est un châssis du véhicule automobile.

Un véhicule automobile de la présente invention est un véhicule automobile équipé d'un tel système de solidarisation.

D'autres caractéristiques et avantages de la présente invention apparaîtront à la lecture de la description qui va en être faite d'exemples de réalisation, en relation avec les figures des planches annexées, dans lesquelles :

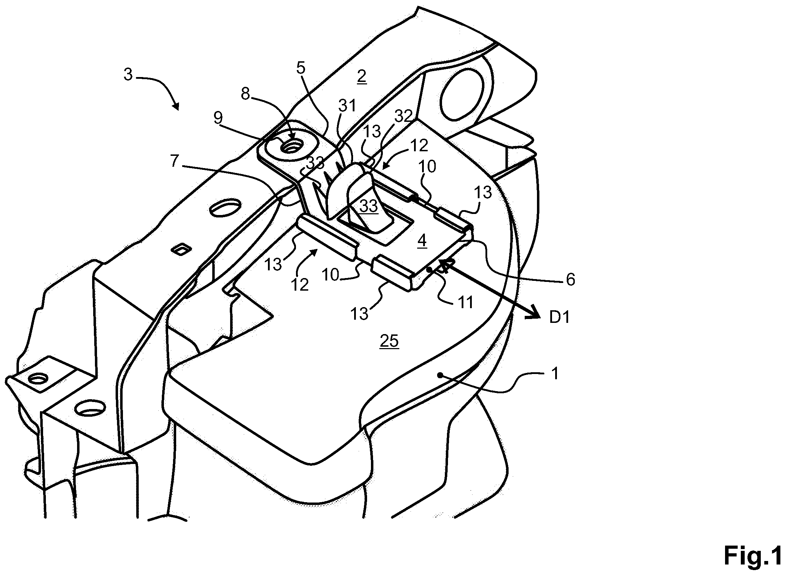

La figure 1 est une vue de dessus d'un système de solidarisation de la présente invention qui est interposé entre un châssis d'un véhicule automobile et un organe équipant le véhicule automobile.

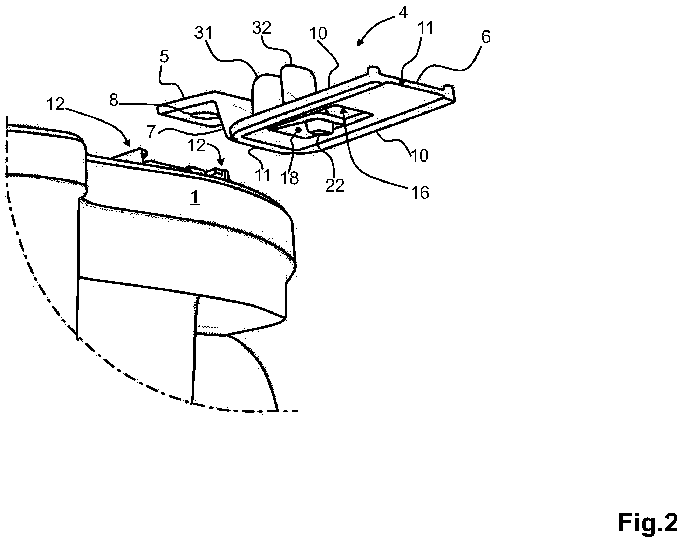

La figure 2 est une vue de dessous du système de solidarisation illustré sur la figure précédente.

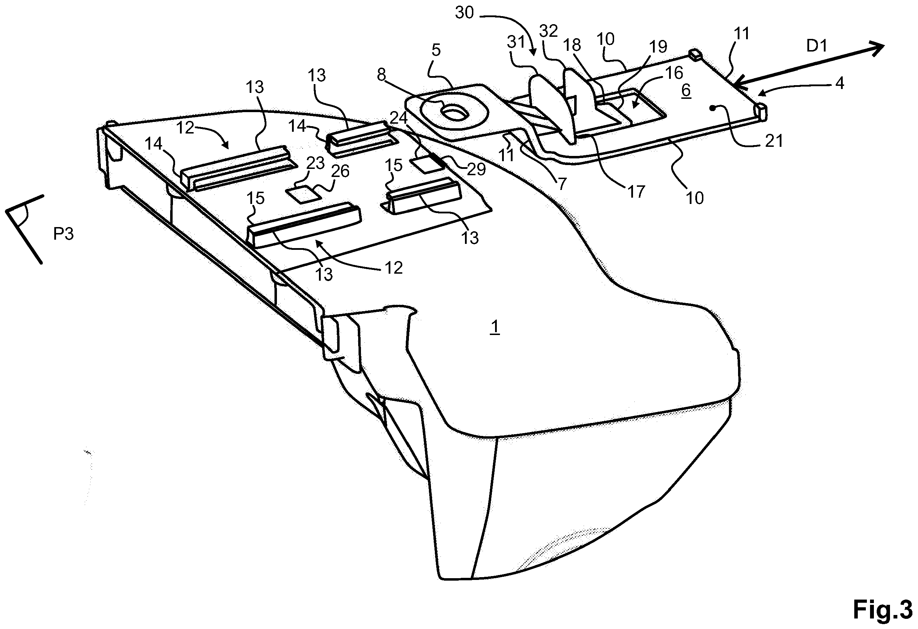

La figure 3 est une partielle de dessus du système de solidarisation illustré sur les figures précédentes.

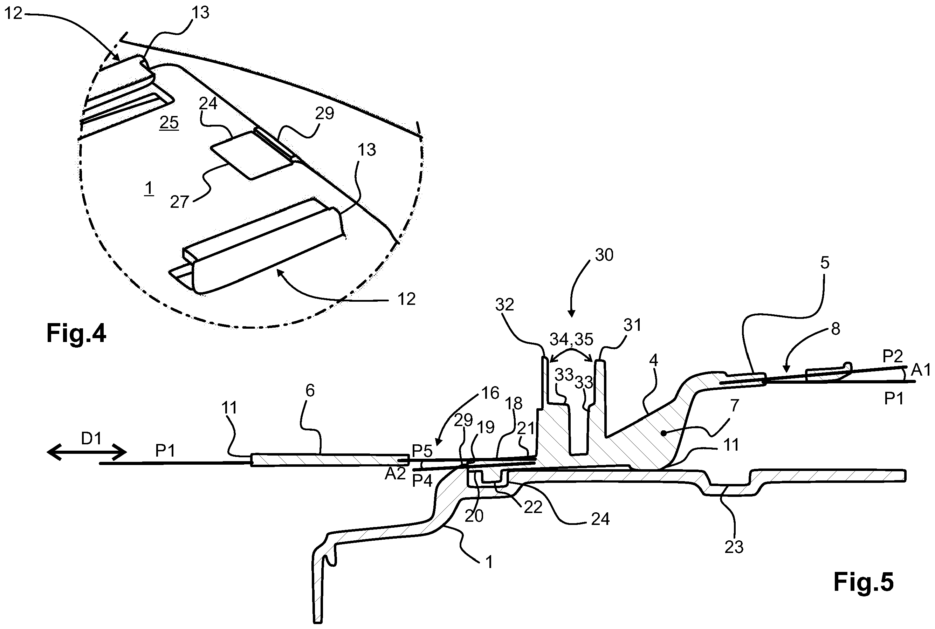

La figure 4 est une vue partielle de dessus du système de solidarisation illustré sur les figures précédentes.
La figure 5 est une vue en coupe du système de solidarisation illustré sur les figures précédentes.

Sur les figures, un véhicule automobile est équipé d'au moins un organe 1 qui est rapporté de manière amovible sur un châssis 2. L'organe 1 est par exemple un filtre à air, une conduite d'alimentation en air, un réservoir ou un autre organe analogue. Le châssis 2 est notamment un élément de la caisse du véhicule automobile.

Un système de solidarisation 3 est interposé entre l'organe 1 et le châssis 2 pour assurer une fixation robuste et amovible de l'organe 1 sur le châssis 2. Un tel système de solidarisation permet un montage et un démontage aisé et rapide de l'organe 1 sur le châssis 2 pour permettre une mise en place de l'organe 1 sur le véhicule automobile ou pour permettre une opération de maintenance de l'organe 1 par exemple. Le système de solidarisation 3 permet le démontage et/ou le démontage sans détérioration de l'organe 1 et du châssis 2, le système de solidarisation 3 étant aussi apte à subir sans détérioration des vibrations affectant communément un compartiment moteur du véhicule automobile, le compartiment moteur étant agencé pour recevoir le moteur à combustion interne et ledit organe 1.

Le système de solidarisation 3 comprend une patte de liaison 4 qui est réalisée en une matière plastique, préférentiellement par moulage. La patte de liaison 4 assure une liaison mécanique robuste et amovible entre l'organe 1 et le châssis 2. La patte de liaison 4 est conformée en un S qui comporte une première plaque 5 et une deuxième plaque 6 qui sont reliées l'une à l'autre par une plaque intermédiaire 7, la première plaque 5 et la deuxième plaque 6 formant des branches du « S ». La première plaque 5 et la deuxième plaque 6 sont ménagées respectivement à l'intérieur d'un premier plan P₁ et d'un deuxième plan P₂. Le premier plan P₁ et le deuxième plan P₂ sont distincts l'un de l'autre. Selon une première forme de réalisation non représentée, le premier plan et le deuxième plan sont parallèles l'un à l'autre et distants l'un de l'autre d'une distance non nulle. Selon une deuxième forme de réalisation représentée sur les figures, le premier plan P₁ et le deuxième plan P₂ forment ensemble un premier angle A₁ qui est aigu et qui est préférentiellement compris entre 0° et 20°, pour faciliter une mise en place de la patte de liaison 4 sur le châssis 2 et/ou sur l'organe 1.

La première plaque 5 est préférentiellement rectangulaire et comprend un premier orifice 8, préférentiellement circulaire, qui est apte à s'emboîter sur un pion 9 que comporte le châssis 2. Ces dispositions sont telles que la patte de liaison 4 est facilement et rapidement rapportée sur le châssis 2 à partir d'un encliquetage du premier orifice 8 sur le pion 9. Selon une forme de réalisation préférée, le premier orifice 8 est ménagé au centre de la première plaque 5. Le premier orifice 8 et le pion 9 assurent une liaison robuste et amovible entre la patte de liaison 4 et le châssis 2. En position d'utilisation de la patte de liaison 4, le pion 9 est emboîté à l'intérieur du premier orifice 8.

La deuxième plaque 6 est préférentiellement rectangulaire. La deuxième plaque 6 comporte deux grands bords opposés 10 qui sont parallèles l'un à l'autre et deux petits bords 11 qui sont parallèles l'un à l'autre et orthogonaux aux grands bords 10. Les deux grands bords 10 sont aptes à coulisser à l'intérieur de glissières 12 respectives ménagées sur l'organe 1. De préférence, chaque glissière 12 comprend deux rebords 13 ménagés selon une direction de glissement D₁ de la patte de liaison 4 à l'intérieur des glissières 12. Chaque rebord 13 comprend deux pans 14,15 ménagés orthogonalement l'un à l'autre dont un premier pan 14 qui est orthogonal à un plan de coulissement P₃ de la patte de liaison 4 à l'intérieur des glissières 12 et un deuxième pan 15, rapporté sur le premier pan 14, qui est ménagé parallèlement au plan de coulissement P₃. En position d'utilisation de la patte de liaison 4, cette dernière est logée à l'intérieur des glissières 12.

La deuxième plaque 6 comporte une fenêtre 16 préférentiellement rectangulaire qui est délimitée par quatre bordures, dont une bordure proximale 17 qui est une bordure ménagée orthogonalement à la direction de coulissement D₁. La bordure proximale 17 est pourvue d'une languette 18 qui est ménagée selon un plan de languette P₄ formant un deuxième angle A₂ avec un plan de deuxième plaque P₅ selon lequel est ménagée la deuxième plaque 6. Le deuxième angle A₂ est préférentiellement aigu et est notamment strictement compris entre 0° et 15°. Le fait que la patte de liaison 4 soit réalisée en matière plastique confère à la languette 18 une élasticité qui lui permet de ployer le long de la bordure proximale 17 lorsque la patte de liaison 4 coulisse le long de l'organe 1 lors d'une opération de mise en place de la patte de liaison 4 sur l'organe 1. La languette 18 est préférentiellement rectangulaire et comporte une grande longueur de languette qui est inférieure à une grande longueur de fenêtre que comporte la fenêtre 16. La languette 18 comporte également une bordure distale 19 qui est ménagée à l'opposé de la bordure proximale 17.

La languette 18 comporte une face inférieure 20 qui est disposée en vis-à-vis de l'organe 1 en position d'utilisation de la patte de liaison 4 sur l'organe 1, la languette 18 comportant une face supérieure 21 qui est opposée à la face inférieure 20. La face inférieure 20 est pourvue d'un doigt 22 qui est globalement ménagé perpendiculairement à un plan d'extension selon lequel est ménagée la face inférieure 20.

En position d'utilisation de la patte de liaison 4, le doigt 22 est emboîté à l'intérieur d'une deuxième encoche 23 ménagée à l'intérieur d'une paroi supérieure 25 de l'organe 1 qui est équipée des glissières 12. La deuxième encoche 23 comporte préférentiellement un premier chanfrein 26 pour faciliter une mise en place du doigt 22 à l'intérieur de la deuxième encoche 23. Le premier chanfrein 26 est ménagé sur un côté de la deuxième encoche qui est le plus éloigné du châssis 2 en position d'utilisation de la patte de liaison 4.

En position de stockage de la patte de liaison 4, le doigt 22 est emboîté à l'intérieur d'une première encoche 24, la deuxième encoche 23 étant interposée entre le châssis 2 et la première encoche 24. La première encoche 24 comporte préférentiellement un deuxième chanfrein 27 qui est ménagé sur un côté de la première encoche 24 qui est en vis-à-vis de la deuxième encoche 23. La première encoche 24 comporte également une butée de blocage 29 contre laquelle vient en contact la bordure distale 19 de la languette 18 en position de stockage de la patte de liaison 4. Le premier chanfrein 26, le deuxième chanfrein 27 et la butée de blocage 29 sont parallèles les uns aux autres en étant alignés selon la direction de glissement D₁. Ainsi en position de stockage de la patte de liaison 4, le doigt 22 est maintenu immobile à l'intérieur de la première encoche 24, de telle sorte que la patte de liaison 4 est maintenue fixe contre l'organe 1, ce qui évite d'égarer la patte de liaison 4 suite à un désengagement du pion 9 hors du premier orifice 8.

La deuxième plaque 6 est pourvue d'un organe de préhension 30 de la patte de liaison 4 qui comprend préférentiellement deux platines parallèles 31,32, dont une première platine 31 solidaire de la deuxième plaque 6 et une deuxième platine 32 solidaire de la languette 18. Ces dispositions sont telles qu'un pincement des deux platines 31,32 par un utilisateur induisant un rapprochement 34 de la deuxième platine 32 vers la première platine 31 permet un mouvement de languette 18, et notamment un désengagement du doigt 22 hors de la deuxième encoche 23 ou de la première encoche 24. Un tel organe de préhension 30 permet aussi un mouvement inverse de la languette 18 et du doigt 22, à partir d'un éloignement 35 de la deuxième platine 32 et de la première platine 31, notamment lors d'un relâchement dudit pincement, de telle sorte que le doigt 22 soit enfiché à l'intérieur de la deuxième encoche 23 ou à l'intérieur de la première encoche 24. A cet effet, les platines 31,32 sont préférentiellement parallèles l'une à l'autre et orthogonales au plan de coulissement P₃. Des contreforts 33 sont par exemple interposés d'une part entre la première platine 31 et la plaque intermédiaire 7, et d'autre part entre la deuxième platine 32 et la languette 18, pour optimiser une robustesse de l'organe de préhension 30, pour optimiser un déplacement de la languette 18 à partir du rapprochement 34 ou du relâchement 35

La deuxième encoche 23 permet ainsi une mise en position de stockage de la patte de liaison 4 sur l'organe 1, puis la première encoche 24 permet une mise en position d'utilisation de la patte de liaison 4 sur l'organe 1. En position d'utilisation de la patte de liaison 4, la mise en place du doigt 22 à l'intérieur de la première encoche 24 ainsi que la mise en contact de la bordure distale 19 contre la butée de blocage 29 confèrent une robustesse et une fiabilité optimisée au système de solidarisation 1, tout en évitant un égarement de la patte de liaison 4, lors de son dégagement du châssis 2, à partir de son maintien en position de stockage.

Autrement dit, lors d'une opération de maintenance de l'organe 1, un procédé de retrait de l'organe 1 du châssis 2 comprend une première étape de désengagement du pion 9 hors du premier orifice 8, puis une deuxième étape de pincement de l'organe de préhension 30 pour désengager le doigt 22 hors de la deuxième encoche 23, puis une troisième étape de relâchement de l'organe de préhension pour engager le doigt 22 à l'intérieur de la première encoche 24 et mettre en contact la bordure distale 19 de la languette 18 contre la butée de blocage, pour immobiliser la patte de liaison 4 sur l'organe 1 et éviter sa perte.

A titre d'exemple, la butée de blocage 29 comporte par exemple une hauteur comprise entre 1,5 mm et 3 mm, préférentiellement de l'ordre de 2,5 mm.

## Revendications

1. Ensemble comprenant d'une part un système de solidarisation (3) entre un organe (1) pour équiper un véhicule automobile et un châssis (2) du véhicule automobile et d'autre part ledit organe, le système de solidarisation (3) comprenant une patte de liaison (4) comportant une première plaque (5) pour assurer une liaison mécanique avec le châssis (2) et une deuxième plaque (6) pour assurer une liaison mécanique avec l'organe (1), la patte de liaison (4) comprenant une plaque intermédiaire (7) interposée entre la première plaque (5) et la deuxième plaque (6), la deuxième plaque (6) étant équipée d'une languette (18) comprenant une bordure distale (19), **caractérisée en ce qu'** en position de stockage de la patte de liaison (4), la bordure distale (19) est en contact contre une butée de blocage (29) ménagée en bordure d'une première encoche (24) que comporte une surface supérieure (25) de l'organe (1), de telle sorte qu'en position de stockage, la patte de liaison (4) est maintenue fixe sur l'organe (1), et **en ce que** ladite patte de liaison (4) est conformée en un S, la première plaque (5) et la deuxième plaque (6) formant les branches du S reliées par la plaque intermédiaire (7).

2. Ensemble selon la revendication précédente, **caractérisé en ce que** la première encoche (24) est ménagée entre deux glissières (12) entre lesquelles la deuxième plaque (6) coulisse entre ladite position de stockage et une position d'utilisation de la patte de liaison (4) dans laquelle un premier orifice (8) ménagé à travers la première plaque (5) peut être emboîté sur un pion (9) que comprend le châssis (2).

3. Ensemble selon l'une quelconque des revendications précédentes, **caractérisé en ce que** la surface supérieure (25) de l'organe (1) comporte une deuxième encoche (23) à l'intérieur duquel un doigt (22) est engagé en position d'utilisation de la patte de liaison (4).

4. Ensemble selon l'une quelconque des revendications précédentes, **caractérisé en ce que** la languette (18) est ménagée selon un plan de languette (P₄) qui forme un deuxième angle aigu (A2) avec un plan de deuxième plaque (P₅) selon lequel la deuxième plaque (6) est ménagée.

5. Ensemble selon l'une quelconque des revendications 2 à 4, **caractérisé en ce que** la patte de liaison (4) est équipée d'un organe de préhension (30) pour la manoeuvre de la languette (18) entre la position d'utilisation et la position de stockage.

6. Ensemble selon la revendication 5, **caractérisé en ce que** l'organe de préhension (30) comprend deux platines parallèles (31,32) dont une première platine (31) solidaire de la deuxième plaque (6) et une deuxième platine (32) solidaire de la languette (18).

7. Ensemble selon la revendication 6, **caractérisé en ce que** la platine de liaison (4) comprend des contreforts (33) qui sont interposés d'une part entre la première platine (31) et la plaque intermédiaire (7), et d'autre part entre la deuxième platine (32) et la languette (18).

8. Ensemble) selon l'une quelconque des revendications précédentes, **caractérisé en ce que** l'organe (1) est indifféremment l'un quelconque d'un filtre à air, une conduite d'alimentation en air et un réservoir tandis que le châssis (2) est un châssis du véhicule automobile.

9. Véhicule automobile équipé d'un ensemble selon l'une quelconque des revendications précédentes.

## Patentansprüche

1. Anordnung, die einerseits ein Befestigungssystem (3) zwischen einem Bauteil (1) zum Ausstatten eines Kraftfahrzeugs und einem Fahrwerk (2) des Kraftfahrzeugs und andererseits dem Bauteil umfasst, wobei das Befestigungssystem (3) eine Verbindungspratze (4) umfasst, die eine erste Platte (5) umfasst, um eine mechanische Verbindung mit dem Fahrwerk (2) sicherzustellen, und eine zweite Platte (6), um eine mechanische Verbindung mit dem Bauteil (1) sicherzustellen, wobei die Verbindungspratze (4) eine Zwischenplatte (7) umfasst, die zwischen die erste Platte (5) und die zweite Platte (6) eingefügt ist, wobei die zweite Platte (6) mit einer Lasche (18) ausgestattet ist, die einen distalen Rand (19) umfasst, **dadurch gekennzeichnet, dass** in Lagerposition der Verbindungspratze (4) der distale Rand (19) gegen einen Blockierungsanschlag (29), der am Rand einer ersten Kerbe (24) eingerichtet ist, die eine obere Oberfläche (25) des Bauteils (1) umfasst, derart in Berührung ist, dass die Verbindungspratze (4) auf dem Bauteil (1) stationär gehalten wird, und dass die Verbindungspratze (4) als ein S ausgestaltet ist, wobei die erste Platte (5) und die zweite Platte (6) die Schenkel des S bilden, die durch die Zwischenplatte (7) verbunden sind.

2. Anordnung nach dem vorstehenden Anspruch, **dadurch gekennzeichnet, dass** die erste Kerbe (24) zwischen zwei Gleitschienen (12) eingerichtet ist, zwischen welchen die zweite Platte (6) zwischen der Lagerposition und einer Verwendungsposition der Verbindungspratze (4) gleitet, in der eine erste Öffnung (8), die durch die erste Platte (5) angelegt ist, auf einem Zapfen (9), den das Fahrwerk (2) umfasst, eingerastet werden kann.

3. Anordnung nach einem der vorstehenden Ansprüche, **dadurch gekennzeichnet, dass** die obere Oberfläche (25) des Bauteils (1) eine zweite Kerbe (23) umfasst, in deren Innerem ein Finger (22) in Verwendungsposition der Verbindungspratze (4) eingefügt ist.

4. Anordnung nach einem der vorstehenden Ansprüche, **dadurch gekennzeichnet, dass** die Lasche (18) entlang einer Laschenebene (P₄) eingerichtet ist, die einen zweiten spitzen Winkel (A2) mit einer Ebene einer zweiten Platte (P₅), gemäß der die zweite Platte (6) eingerichtet ist, bildet.

5. Anordnung nach einem der Ansprüche 2 bis 4, **dadurch gekennzeichnet, dass** die Verbindungspratze (4) mit einem Greifelement (30) für das Handhaben der Lasche (18) zwischen der Verwendungsposition und der Lagerposition ausgestattet ist.

6. Anordnung nach Anspruch 5, **dadurch gekennzeichnet, dass** das Greifelement (30) zwei parallele Platten (31, 32) umfasst, darunter eine erste Platte (31), die mit der zweiten Platte (6) fest verbunden ist, und eine zweite Platte (32), die mit der Lasche (18) fest verbunden ist.

7. Anordnung nach Anspruch 6, **dadurch gekennzeichnet, dass** die Verbindungsplatte (4) Streben (33) umfasst, die einerseits zwischen der ersten Platte (31) und der Zwischenplatte (7) und andererseits zwischen der zweiten Platte (32) und der Lasche (18) eingefügt sind.

8. Anordnung nach einem der vorstehenden Ansprüche, **dadurch gekennzeichnet, dass** das Bauteil (1) gleichermaßen ein Luftfilter, eine Luftversorgungsleitung und ein Behälter ist, während das Fahrwerk (2) ein Fahrwerk des Kraftfahrzeugs ist.

9. Kraftfahrzeug, das mit einer Anordnung nach einem der vorstehenden Ansprüche ausgestattet ist.

## Claims

1. An assembly including on the one hand a securing system (3) between a member (1) to equip a motor vehicle and a chassis (2) of the motor vehicle, and on the other hand said member, the securing system (3) including a linking tab (4) comprising a first sheet (5) for ensuring a mechanical link with the chassis (2), and a second sheet (6) for ensuring a mechanical link with the member (1), the linking tab (4) including an intermediate sheet (7) interposed between the first sheet (5) and the second sheet (6), the second sheet (6) being equipped with a tongue (18) including a distal edge (19), **characterized in that** in the storage position of the linking tab (4), the distal edge (19) is in contact against a blocking stop (29) arranged at the edge of a first notch (24) which is comprised by an upper surface (25) of the member (1), such that in the storage position, the linking tab (4) is held fixed on the member (1), and **in that** said linking tab (4) is formed in an S shape, the first sheet (5) and the second sheet (6) forming the branches of the S connected by the intermediate sheet (7) .

2. The assembly according to the preceding claim, **characterized in that** the first notch (24) is arranged between two slides (12), between which the second sheet (6) slides between said storage position and a position of use of the linking tab (4), in which a first opening (8) arranged through said first sheet (5) can be engaged on a pin (9) comprised by the chassis (2).

3. The assembly according to any one of the preceding claims, **characterized in that** the upper surface (25) of the member (1) comprises a second notch (23) in the interior of which a finger (22) is engaged in position of use of the linking tab (4).

4. The assembly according to any one of the preceding claims, **characterized in that** the tongue (18) is arranged according to a tongue plane (P₄) which forms a second acute angle (A2) with a second sheet plane (P₅) according to which the second sheet (6) is arranged.

5. The assembly according to any one of Claims 2 to 4, **characterized in that** the linking tab (4) is equipped with a gripping member (30) for the manoeuvring of the tongue (18) between the position of use and the storage position.

6. The assembly according to Claim 5, **characterized in that** the gripping member (30) includes two parallel plates (31, 32), of which a first plate (31) is integral with the second sheet (6), and a second plate (32) is integral with the tongue (18).

7. The assembly according to Claim 6, **characterized in that** the linking tab (4) includes abutments (33) which are interposed on the one hand between the first plate (31) and the intermediate sheet (7), and on the other hand between the second plate (32) and the tongue (18) .

8. The assembly according to any one of the preceding claims, **characterized in that** the member (1) is indifferently any one of an air filter, an air supply line and a reservoir, while the chassis (2) is a chassis of the motor vehicle.

9. A motor vehicle equipped with an assembly according to any one of the preceding claims.
